# EUROPEAN PATENT APPLICATION

(11) **EP 4 280 653 A1**
(43) Date of publication of application: **22.11.2023**
(21) Application number: 21919433.9
(22) Date of filing: 18.01.2021
(51) Int. Cl.: H04W 16/28, H04W 72/04, H04W 28/16

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2021/001510
(87) International publication number: WO 2022/153540

(57) **Abstract**

A terminal according to one aspect of the present disclosure comprising: a receiving section that receives a list of multiple serving cells or a list of multiple bandwidth parts, to which multiple transmission configuration indication (TCI) states that are applicable to multiple types of channels are applied, receives configuration information of the multiple TCI states, and receives indication information indicating one or more TCI states among the multiple TCI states; and a control section that determines, based on the configuration information and the indication information, a reference signal of a certain quasi-co-location (QCL) type, the reference signal being applied to the multiple serving cells or the multiple bandwidth parts. According to one aspect of the present disclosure, it is possible to appropriately perform TCI state indication.

## Description

### Technical Field

The present disclosure relates to a terminal, a radio communication method, and a base station in next-generation mobile communication systems.

### Background Art

In a Universal Mobile Telecommunications System (UMTS) network, specifications of Long-Term Evolution (LTE) have been drafted for the purpose of further increasing data rates, providing low latency, etc. (See Non Patent Literature 1). In addition, specifications of LTE-Advanced (3GPP Releases (Rel.)10 to 14) have been drafted for the purpose of further increasing capacity and advancing LTE (Third Generation Partnership Project (3GPP) Rel. 8 and 9).

Successor systems to LTE (for example, also referred to as the 5th generation mobile communication system (5G), 5G+ (plus), 6th generation mobile communication system (6G), New Radio (NR), or 3GPP Rel. 15 and subsequent releases) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In a future radio communication system (for example, NR), it is under study that a user terminal (terminal, user terminal, user equipment (UE)) controls transmission/reception processing based on information regarding quasi-co-location (QCL) (QCL assumption/Transmission Configuration Indication (TCI) state/spatial relation).

In addition, for Rel. 17 and subsequent release, a common TCI across at least one of multiple component carriers (CCs) and multiple Bandwidth Parts (BWPs) is used is under study.

However, a method of configuration and indication of a common beam for the multiple CCs/BWPs has not been sufficiently studied. If this study is not sufficient, a degradation of communication quality, a degradation of throughput, etc. may be caused.

Therefore, an object of the present disclosure is to provide a terminal, a radio communication method, and a base station that appropriately performs TCI state indication.

### Solution to Problem

A terminal according to one aspect of the present disclosure comprising: a receiving section that receives a list of multiple serving cells or a list of multiple bandwidth parts, to which multiple transmission configuration indication (TCI) states that are applicable to multiple types of channels are applied, receives configuration information of the multiple TCI states, and receives indication information indicating one or more TCI states among the multiple TCI states; and a control section that determines, based on the configuration information and the indication information, a reference signal of a certain quasi-co-location (QCL) type, the reference signal being applied to the multiple serving cells or the multiple bandwidth parts.

### Advantageous Effects of Invention

According to one aspect of the present disclosure, it is possible to appropriately perform TCI state indication.

### Brief Description of Drawings

[FIG. 1] FIGS. 1A and 1B are diagrams illustrating an example of a common beam.
[FIG. 2] FIG. 2 is diagram illustrating an example of configurable QCL configuration.
[FIG. 3] FIG. 3 is diagram illustrating an example of non-configurable QCL configuration.
[FIG. 4] FIGS. 4A and 4B are diagrams illustrating an example of a list to which unified TCI state is applied.
[FIG. 5] FIG. 5 is a diagram illustrating an example of a method of determination of an RS ID according to a second embodiment.
[FIG. 6] FIGS. 6A and 6B are diagrams illustrating an example of configuration information according to the second embodiment.
[FIG. 7] FIGS. 7A and 7B are diagrams illustrating another example of configuration information according to the second embodiment.
[FIG. 8] FIG. 8 is a diagram illustrating an example of a method of application of an RS according to the second embodiment.
[FIG. 9] FIG. 9 is a diagram illustrating another example of the method of application of the RS according to the second embodiment.
[FIG. 10] FIG. 10 is a diagram illustrating an example of the method of application of the RS in signalling configuration 3 of the unified TCI state.
[FIG. 11] FIG. 11 is a diagram illustrating an example of a schematic structure of a radio communication system according to one embodiment.
[FIG. 12] FIG. 12 is a diagram illustrating an example of a structure of a base station according to one embodiment.
[FIG. 13] FIG. 13 is a diagram illustrating an example of a structure of a user terminal according to one embodiment.

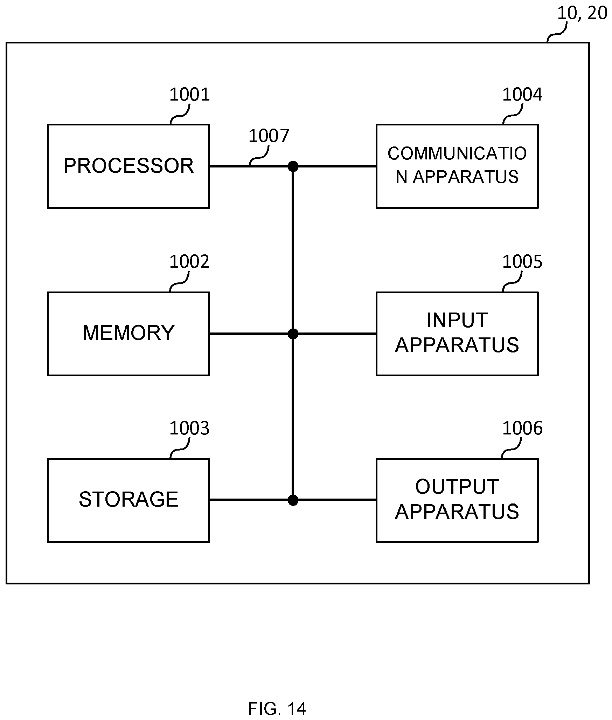

[FIG. 14] FIG. 14 is a diagram illustrating an example of a hardware structure of the base station and the user terminal according to one embodiment.

### Description of Embodiments

### (TCI, Spatial Relation, and QCL)

In NR, it is under study to control reception processing (for example, at least one of reception, demapping, demodulation, and decoding) and transmission processing (for example, at least one of transmission, mapping, precoding, modulation, and coding) in UE of at least one of a signal and a channel (expressed as a signal/channel) based on a transmission configuration indication state (TCI state).

The TCI state may represent what is applied to a downlink signal/channel. One corresponding to the TCI state applied to an uplink signal/channel may be expressed as a spatial relation.

The TCI state is information regarding a quasi-co-location (QCL) of the signal/channel, and may also be referred to as a spatial Rx parameter, spatial relation information, etc. The TCI state may be configured in the UE for each channel or each signal.

The QCL is an indicator indicating a statistical property of a signal/channel. For example, it may mean that, when one signal/channel and another signal/channel have a QCL relation, it is possible to assume that at least one of Doppler shift, Doppler spread, an average delay, a delay spread, and a spatial parameter (for example, a spatial Rx parameter) is identical between the plurality of different signals/channels (the plurality of different signals/channels are QCLed with respect to at least one of these).

Note that the spatial Rx parameter may correspond to a reception beam of the UE (for example, a reception analog beam), and the beam may be specified based on spatial QCL. The QCL (or at least one element of the QCL) in the present disclosure may be interpreted as spatial QCL (sQCL) .

A plurality of types of QCL (QCL types) may be defined. For example, four QCL types A to D with different parameters (or parameter sets) that can be assumed to be identical may be provided. These parameters (which may be referred to as QCL parameters) are as follows:
- QCL type A (QCL-A): Doppler shift, Doppler spread, average delay, and delay spread;
- QCL type B (QCL-B): Doppler shift and Doppler spread;
- QCL type C (QCL-C): Doppler shift and average delay; and
- QCL type D (QCL-D): spatial Rx parameter.

It may be referred to as a QCL assumption for the UE to assume that a certain control resource set (CORESET), channel, or reference signal has a specific QCL (for example, QCL type D) relation with another CORESET, channel, or reference signal.

The UE may determine at least one of a transmission beam (Tx beam) and a reception beam (Rx beam) of a signal/channel based on a TCI state of the signal/channel or the QCL assumption.

The TCI state may be, for example, information regarding the QCL of a target channel (in other words, a reference signal (RS) for the channel) and another signal (for example, another RS). The TCI state may be configured (indicated) by higher layer signalling, physical layer signalling, or a combination thereof.

The physical layer signalling may be, for example, Downlink Control Information (DCI).

A channel for which a TCI state or spatial relation is configured (specified) may be, for example, at least one of a Physical Downlink Shared Channel (PDSCH), a Physical Downlink Control Channel (PDCCH), a Physical Uplink Shared Channel (PUSCH), and a Physical Uplink Control Channel (PUCCH).

Furthermore, an RS having a QCL relation with the channel may be, for example, at least one of a Synchronization Signal Block (SSB), a Channel State Information Reference Signal (CSI-RS)), a measurement reference signal (Sounding Reference Signal (SRS)), a tracking CSI-RS (also referred to as a Tracking Reference Signal (TRS)), and a QCL detection reference signal (also referred to as a QRS).

The SSB is a signal block including at least one of a primary synchronization signal (PSS), a secondary synchronization signal (SSS), and a broadcast channel (physical broadcast channel (PBCH)). The SSB may be referred to as an SS/PBCH block.

An RS of QCL type X in a TCI state may mean an RS in a QCL type X relation with (DMRS of) a certain channel/signal, and this RS may be referred to as a QCL source of QCL type X in the TCI state.

### (Path-loss RS)

The Path-loss PL_{b,f,c} (q_{d}) [dB] in transmission power control of each of a PUSCH, a PUCCH, and an SRS is calculated by the UE by using the index q_{d} of a reference signal (an RS, or a Path-loss reference RS (PathlossReferenceRS)) for a downlink BWP associated with the active UL BWP b of the carrier f of the serving cell c. In the present disclosure, the Path-loss reference RS, the Path-loss (PL)-RS, the index q_{d}, the RS used for Path-loss calculation, and an RS resource used for Path-loss calculation may be interchangeably interpreted. In the present disclosure, calculate, estimate, measure, and track may be interchangeably interpreted.

Whether to change the existing mechanism of higher layer filtered RSRP for Path-loss measurement when the Path-loss RS is updated by an MAC CE is under study.

When the Path-loss RS is updated by an MAC CE, Path-loss measurement based on L1-RSRP may be applied. At available timing after the MAC CE for updating the Path-loss RS, higher layer filtered RSRP may be used for Path-loss measurement; before the higher layer filtered RSRP is applied, L1-RSRP may be used for Path-loss measurement. At available timing after the MAC CE for updating the Path-loss RS, higher layer filtered RSRP may be used for Path-loss measurement; before the above-mentioned timing, the higher layer filtered RSRP of the previous Path-loss RS may be used. Similar to the operation of Rel. 15, higher layer filtered RSRP may be used for Path-loss measurement, and the UE may track all Path-loss RS candidates configured by the RRC. The maximum number of Path-loss RSs that can be configured by the RRC may depend on the UE capability. When the maximum number of Path-loss RSs that can be configured by the RRC is X, X or less Path-loss RS candidates may be configured by the RRC, and a Path-loss RS may be selected by the MAC CE from among the configured Path-loss RS candidates. The maximum number of Path-loss RSs that can be configured by RRC may be 4, 8, 16, 64, etc.

In the present disclosure, higher layer filtered RSRP, filtered RSRP, and layer 3 filtered RSRP may be interchangeably interpreted.

### (Default TCI State/Default Spatial Relation/Default PL-RS)

In an RRC connection mode, both in a case where TCI information in DCI (higher layer parameter TCI-PresentInDCI) is set to "enabled" and in a case where no TCI information in DCI is configured, if the time offset between the reception of DL DCI (DCI that schedules a PDSCH) and the corresponding PDSCH (the PDSCH scheduled by the DCI) is smaller than a threshold (timeDurationForQCL) (application condition: a first condition), in the case of non-cross-carrier scheduling, a TCI state (a default TCI state) of the PDSCH may be a TCI state of a lowest CORESET ID in a latest slot in an active DL BWP of the CC (of a specific UL signal). Otherwise, the TCI state (the default TCI state) of the PDSCH may be a TCI state of the lowest TCI state ID of PDSCH in the active DL BWP of the scheduled CC.

In Rel. 15, individual MAC CEs of a MAC CE for activation/deactivation of a PUCCH spatial relation and a MAC CE for activation/deactivation of an SRS spatial relation are needed. The PUSCH spatial relation follows the SRS spatial relation.

In Rel. 16, at least one of the MAC CE for activation/deactivation of the PUCCH spatial relation and the MAC CE for activation/deactivation of the SRS spatial relation may not be used.

When, in FR2, neither a spatial relation nor a PL-RS for a PUCCH is configured (application condition: a second condition), default assumptions of the spatial relation and the PL-RS (a default spatial relation and a default PL-RS) are applied to the PUCCH. When, in FR2, neither a spatial relation nor a PL-RS for an SRS (an SRS resource for an SRS, or an SRS resource corresponding to an SRI in DCI format 0 1 scheduling a PUSCH) is configured (application condition: the second condition), default assumptions of the spatial relation and the PL-RS (a default spatial relation and a default PL-RS) are applied to the PUSCH scheduled by the DCI format 0_1 and the SRS.

When CORESETs are configured in an active DL BWP on the CC, the default spatial relation and the default PL-RS may be a TCI state or a QCL assumption of the CORESET having the lowest CORESET ID in the active DL BWP. When no CORESETs are configured in the active DL BWP on the CC, the default spatial relation and the default PL-RS may be an active TCI state having the lowest ID of PDSCH in the active DL BWP.

In Rel. 15, a spatial relation of a PUSCH scheduled by DCI format 0_0 follows a spatial relation of a PUCCH resource having the lowest PUCCH resource ID among active spatial relations of PUCCHs on the same CC. Even when no PUCCHs are transmitted on SCells, the network needs to update the PUCCH spatial relations on all SCells.

In Rel. 16, a PUCCH configuration for the PUSCH scheduled by the DCI format 0 0 is not needed. When, for the PUSCH scheduled by the DCI format 0_0, there is no active PUCCH spatial relation or no PUCCH resource on an active UL BWP in the CC (application condition: the second condition), the default spatial relation and the default PL-RS are applied to the PUSCH.

The condition under which a default spatial relation/default PL-RS for SRS is applied may include that a default beam path-loss enabling information element for SRS (a higher layer parameter enableDefaultBeamPlForSRS) is set to "enabled". The condition under which a default spatial relation/default PL-RS for PUCCH is applied may include that a default beam path-loss enabling information element for PUCCH (a higher layer parameter enableDefaultBeamPlForPUCCH) is set to "enabled". The condition under which a default spatial relation/default PL-RS for PUSCH scheduled by DCI format 0_0 is applied may include that a default beam path-loss enabling information element for PUSCH scheduled by DCI format 0 0 (a higher layer parameter enableDefaultBeamPlForPUSCH0_0) is set to "enabled".

Further, the above-mentioned threshold may be referred to as QCL time duration "timeDurationForQCL", "threshold", "threshold for offset between a DCI indicating a TCI state and PDSCH scheduled by the DCI", "threshold-Sched-Offset", a schedule offset threshold, a scheduling offset threshold, etc.

### (Multi-TRP)

For NR, one or a plurality of transmission/reception points (TRPs) (multiple TRPs (multi-TRP (MTRP))) that perform DL transmission to the UE by using one or a plurality of panels (multiple panels) are under study. Furthermore, UL transmission to the one or the plurality of TRPs by the UE by using one or more panels is also under study.

Note that the plurality of TRPs may correspond to the same cell identifier (ID), or may correspond to different cell IDs. The cell ID may be a physical cell ID, or may be a virtual cell ID.

The multiple TRPs (for example, TRP #1 and TRP #2) may be connected to each other by an ideal/non-ideal backhaul, and information, data, etc. may be exchanged. From respective TRPs of the multiple TRPs, different code words (CWs) and different layers may be transmitted. As a mode of multi-TRP transmission, non-coherent joint transmission (NCJT) may be used.

In NCJT, for example, TRP #1 performs modulation mapping and layer mapping of a first code word and transmits a first number of layers (for example, 2 layers) and transmits a first PDSCH by using a first precoding. In addition, TRP #2 performs modulation mapping and layer mapping of a second code word and transmits a second number of layers (for example, 2 layers) and transmits a second PDSCH by using a second precoding.

Note that a plurality of PDSCHs (multiple PDSCHs) on which NCJT is performed may be defined as partially or fully overlapping with respect to at least one of time domain and frequency domain. In other words, the first PDSCH from the first TRP and the second PDSCH from the second TRP may overlap with each other in at least one of time resource and frequency resource.

It may be assumed that these first PDSCH and second PDSCH are not in a quasi-co-location (QCL) relation (not quasi-co-located). Reception of the multiple PDSCHs may be interpreted as simultaneous reception of PDSCHs other than a certain QCL type (for example, QCL type D).

A plurality of PDSCHs (which may be referred to as multiple PDSCHs) from the multiple TRPs may be scheduled by using one DCI (single DCI, single PDCCH) (single master mode, multiple TRPs based on single DCI (single-DCI based multi-TRP)). A plurality of PDSCHs from multiple TRPs may be scheduled by using of a plurality of DCI (multiple DCI, multiple PDCCHs), respectively (multi-master mode, multiple TRPs based on multiple DCI (multi-DCI based multi-TRP)).

For URLLC for multiple TRPs, support for repetition of PDSCH (transport blocks (TB) or code word (CW)) across the multiple TRPs is under study. Support for repetition schemes (URLLC schemes, for example, schemes 1, 2a, 2b, 3, and 4) across the multiple TRPs on a frequency domain, a layer (spatial) domain, or a time domain is under study. Scheme 1 applies space division multiplexing (SDM) to multiple PDSCHs from the multiple TRPs. Schemes 2a and 2b apply frequency division multiplexing (FDM) to PDSCHs from the multiple TRPs. In the scheme 2a, redundancy versions (RVs) for the multiple TRPs are the same. In the scheme 2b, the RVs for the multiple TRPs may be the same, or may be different from each other. Schemes 3 and 4 apply time division multiplexing (TDM) to multiple PDSCHs from the multiple TRPs. In the scheme 3, the multiple PDSCHs from the multiple TRPs are transmitted in one slot. In the scheme 4, the multiple PDSCHs from the multiple TRPs are transmitted in different slots.

According to such a multi-TRP scenario, more flexible transmission control using a channel with high quality is possible.

In order to support intra-cell (having the same cell ID) and inter-cell (having different cell IDs) multi-TRP transmission based on multiple PDCCHs, in RRC configuration information for linking a plurality of pairs of PDCCHs and PDSCHs having multiple TRPs, one control resource set (CORESET) in PDCCH configuration information (PDCCH-Config) may correspond to one TRP.

When at least one of the following conditions 1 and 2 is satisfied, the multiple TRPs based on multiple DCI is determined by the UE. In this case, the TRP may be interpreted as CORESET pool index.

### {Condition 1}

CORESET pool index set to 1 is configured.

### {Condition 2}

Two different values (for example, 0 and 1) of CORESET pool indices are configured.

When the following condition is satisfied, the multiple TRPs based on single DCI is determined by the UE. In this case, two TRPs may be interpreted as two TCI states indicated by a MAC CE/DCI.

### {Condition}

In order to indicate one or two TCI states for one codepoint of a TCI field in DCI, a "MAC CE for enhanced TCI state activation/deactivation for a UE-specific PDSCH (Enhanced TCI states Activation/Deactivation for UE-specific PDSCH MAC CE)" is used.

DCI for common beam indication may be a UE-specific DCI format (for example, DL DCI format (for example, 1 1 or 1_2) or UL DCI format (for example, 0_1 or 0_2)), or may be a UE-group common DCI format.

### (Simultaneous Beam Update of Plurality of CCs)

In Rel. 16, one MAC CE can update beam indexes (TCI states) of a plurality of CCs.

The UE may be configured with up to two applicable CC lists (for example, applicable-CC-lists) by RRC. When the two applicable CC lists are configured, the two applicable CC lists may respectively correspond to intra-band CA in FR1 and intra-band CA in FR2.

An activation MAC CE of the TCI state of the PDCCH activates the TCI state associated with the same CORESET ID on all BWPs/CCs in the applicable CC list.

An activation MAC CE of the TCI state of the PDSCH activates the TCI state on all the BWPs/CCs in the applicable CC list.

An activation MAC CE of a spatial relation of A-SRS/SP-SRS activates the spatial relation associated with the same SRS resource ID on all BWPs/CCs in the applicable CC list.

For example, the UE is configured with an applicable CC list indicating CC #0, #1, #2, and #3 and a list indicating 64 TCI states for CORESET or PDSCH of each CC. If one TCI state for CC #0 is activated by the MAC CE, the corresponding TCI state is activated in CC #1, #2, and #3.

Such simultaneous beam update is applicable only to a single TRP case is under study.

For the PDSCH, the UE may be based on the following procedure A.

### [Procedure A]

The UE receives an activation command to map up to 8 TCI states to a codepoint of a DCI field (TCI field) within one CC/DL BWP or within one set of CC/BWP. If one set of TCI state IDs is activated for one set of CCs/DL BWPs, the applicable list of CCs is determined by the indicated CC in the activation command and the same set of TCI states is applied for all DL BWPs in the indicated CC. The one set of TCI state IDs may be activated for one set of CCs/DL BWPs only when the UE is not provided with different values of the CORESET pool index (CORESETPoolIndex) in the CORESET information element (ControlResourceSet) and is not provided with at least one TCI codepoint mapped to two TCI states.

For the PDCCH, the UE may be based on the following procedure B:

### [Procedure B]

When the UE is provided with up to two lists of cells for simultaneous TCI state activation with a simultaneous TCI update list (at least one of simultaneousTCI-UpdateList-r16 and simultaneousTCI-UpdateListSecond-r16) by a simultaneous TCI cell list (simultaneousTCI-CellList), the UE applies an antenna port quasi co-location (QCL) provided by the TCI state having the same activated TCI state ID value to the CORESET with an index p in all configured DL BWPs of all configured cells in one list determined from a serving cell index provided by the MAC CE command. The simultaneous TCI cell list may be provided for simultaneous TCI state activation only when the UE is not provided with different values of the CORESET pool index (CORESETPoolIndex) in the CORESET information element (ControlResourceSet) and is not provided at least one TCI code point mapped to two TCI states.

For semi-persistent (SP)-SRS/aperiodic (AP)-SRS, the UE may be based on the following procedure C.

### [Procedure C]

For one set of CCs/BWPs, when spatial relation information (spatialRelationInfo) for an SP-SRS or AP-SRS resource configured by an SRS resource information element (higher layer parameter SRS-Resource) is activated/updated by the MAC CE, the applicable list of CCs is indicated by the simultaneous spatial update list (higher layer parameter simultaneousSpatial-UpdateList-r16 or simultaneousSpatial-UpdateListSecond-r16), and the spatial relation information is applied to the SP-SRS or AP-SRS resources with the same SRS resource ID in all BWPs in the indicated CC. Only when the UE is not provided with different values of the CORESET pool index (CORESETPoolIndex) in the CORESET information element (ControlResourceSet) and is not provided with at least one TCI code point mapped to two TCI states, for one set of CCs/BWPs, the spatial relation information (spatialRelationInfo) for the SP-SRS or AP-SRS resources configured by the SRS resource information element (higher layer parameter SRS-Resource) is activated/updated by the MAC CE.

The simultaneous TCI cell list (simultaneousTCI-CellList) and simultaneous TCI update list (at least one of simultaneousTCI-UpdateList1-r16 and simultaneousTCI-UpdateList2-r16) are a list of serving cells in which the TCI relation can be simultaneously updated by using the MAC CE. The simultaneousTCI-UpdateList1-r16 and the simultaneousTCI-UpdateList2-r16 do not include the same serving cell.

The simultaneous spatial update list (at least one of the higher layer parameters simultaneousSpatial-UpdateList1-r16 and simultaneousSpatial-UpdateList2-r16) is a list of serving cells in which the spatial relation can be simultaneously updated by using the MAC CE. The simultaneousSpatial-UpdateList1-r16 and the simultaneousSpatial-UpdateList2-r16 do not include the same serving cell.

Here, the simultaneous TCI update list and the simultaneous spatial update list are configured by the RRC, a CORESET pool index of the CORESET is configured by the RRC, and a TCI code point mapped to the TCI state is indicated by the MAC CE.

### (Unified/Common TCI Framework)

According to a unified TCI framework, UL and DL channels can be controlled by a common framework. Instead of defining a TCI state or a spatial relation for each channel just as Rel. 15 does, the unified TCI framework may indicate a common beam (common TCI state) and apply the common beam (the common TCI state) to all UL and DL channels, or may apply a common beam for UL to all UL channels and apply a common beam for DL to all DL channels.

One common beam for both DL and UL or a common beam for DL and a common beam for UL (two common beams in total) are under study.

The UE may assume the same TCI state (joint TCI state, joint TCI state pool, joint common TCI state pool) for the UL and DL. The UE may assume different TCI states (separate TCI state, separate TCI pool, UL separate TCI pool and DL separate TCI pool, separate common TCI pool, UL common TCI state pool and DL common TCI state pool) for respective UL and DL.

Default beams for the UL and the DL may be set to the same by MAC CE-based beam management (MAC CE level beam indication). A default TCI state for the PDSCH may be updated to set the same of that of a default UL beam (spatial relation).

A common beam/unified TCI state from the same TCI pool for both UL and DL (joint common TCI pool) may be indicated by beam management based on the DCI (DCI level beam indication). M (> 1) TCI states may be activated by the MAC CE. One TCI state from M active TCI states may be selected by UL/DL DCI. The selected TCI state may be applied to channels/RSs for both UL and DL.

The TCI pool (set) may be a plurality of TCI states configured by RRC parameters or a plurality of TCI states activated by the MAC CE (active TCI states, active TCI pools, sets) among the plurality of TCI states configured by RRC parameters. Each TCI state may be a QCL type A/D RS. As the QCL type A/D RS, an SSB, a CSI-RS, or an SRS may be configured.

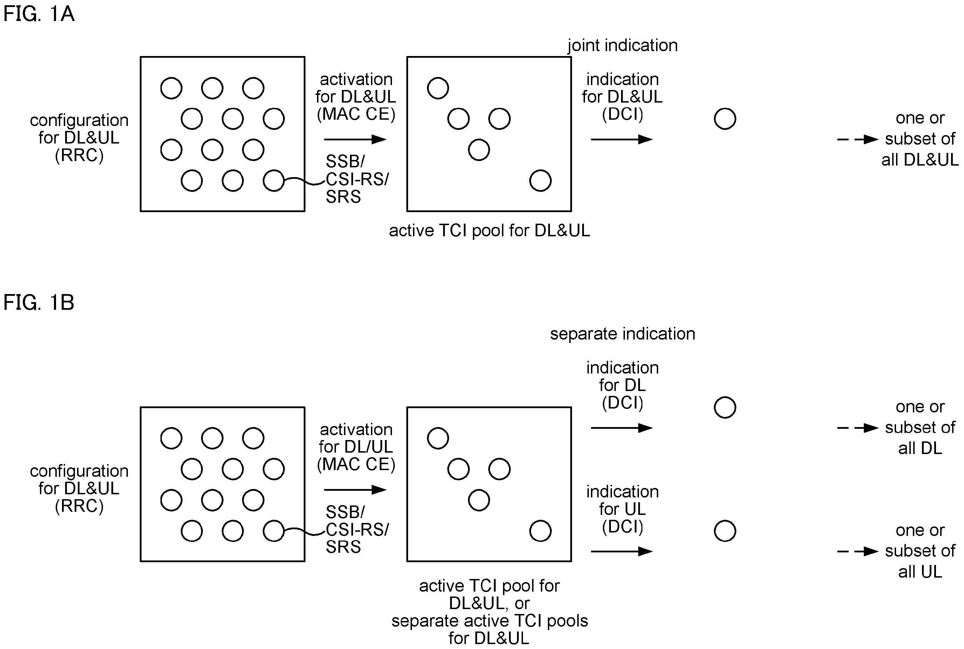

In an example of FIG. 1A, the RRC parameter (information element) configures multiple TCI states for both DL and UL. The MAC CE may activate multiple TCI states among the configured multiple TCI states. The DCI may indicate at least one of the activated multiple TCI states. The DCI may be a UL/DL DCI. The indicated TCI state may be applied to at least one (or all) of UL/DL channels/RSs. Single DCI may indicate both UL TCI and DL TCI.

In the example of FIG. 1A, one point may be one TCI state applied to both UL and DL, or two TCI states applied to UL and DL, respectively.

At least one of the multiple TCI states configured by the RRC parameter and the multiple TCI states activated by the MAC CE may be referred to as TCI pool (common TCI pool, joint TCI pool, TCI state pool). The multiple TCI states activated by the MAC CE may be referred to as active TCI pool (active common TCI pool).

Note that, in the present disclosure, a higher layer parameter (RRC parameters) configuring the multiple TCI states may be referred to as configuration information that configures the multiple TCI states, or simply configuration information. Furthermore, in the present disclosure, indicating one of the multiple TCI states by using DCI may be reception of indication information indicating one of the multiple TCI states included in the DCI or may be simply reception of "indication information".

In an example of FIG. 1B, the RRC parameter configures multiple TCI states for both DL and UL (joint common TCI pool). The MAC CE may activate multiple TCI states (active TCI pool) among the configured multiple TCI states. (Individual, separate) active TCI pools for each of UL and DL may be configured/activated.

One or more (for example, one) TCI states may be selected (indicated) by the DL DCI or new DCI format. The selected TCI state may be applied to one or more (or all) DL channels/RSs. The DL channel may be a PDCCH/PDSCH/CSI-RS. The UE may determine a TCI state for each DL channel/RS by using a TCI state operation (TCI framework) of Rel. 16. One or more (for example, one) TCI states may be selected (indicated) by the UL DCI or new DCI format. The selected TCI state may be applied to one or more (or all) UL channels/RSs. The UL channel may be a PUSCH/SRS/PUCCH. Thus, different DCIs may separately indicate UL TCI and DL TCI.

Existing DCI format 1_2/1_2 may be used to indicate common TCI state.

A common TCI framework may have separate TCI states for DL and UL.

A common TCI framework may have separate TCI states for DL and UL. It is not preferable to indicate common TCI state only for UL by using DCI format 1_1/1_2.

### (Constraints on QCL Configuration)

As mentioned above, a case that a beam for multiple types of channels is controlled by common beam indication/activation (MAC CE/DCI) in accordance with the common TCI framework is under study, but this control is performed for one CC (cell).

Simultaneous beam update across a plurality of CCs specified in specifications for Rel. 16 can update beams for a plurality of BWPs/CCs by using one MAC CE beam indication, and thus overhead of beam control can be reduced.

It is preferable that the simultaneous beam update across the plurality of CCs is also possible in the common TCI framework. However, there are constraints on configuration of QCL between a PDCCH and a tracking reference signal (TRS) in the plurality of CCs as follows.

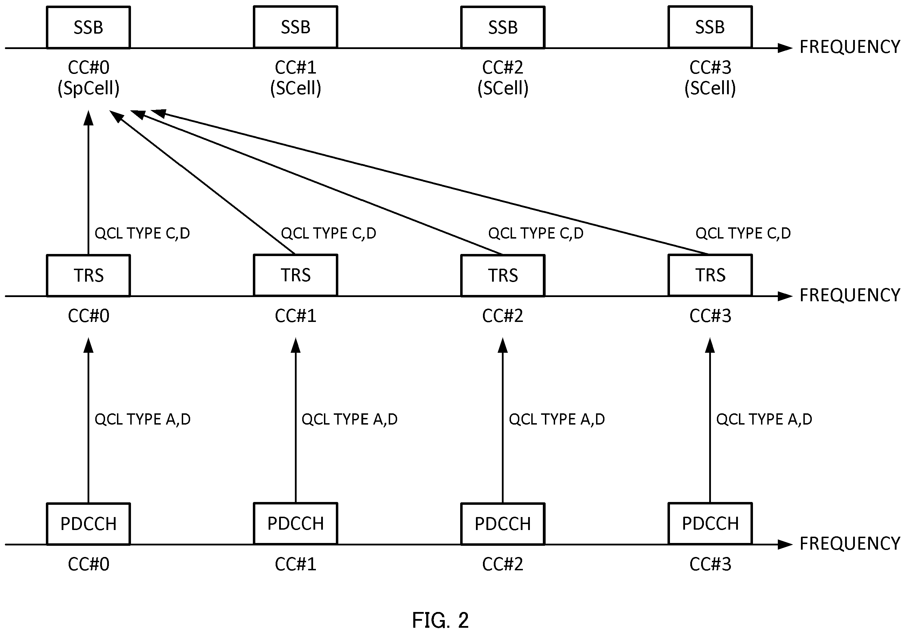

For example, such configuration illustrated in FIG. 2 is possible. Assume that CC #0 being a special cell (SpCell) (primary cell (PCell) or primary secondary cell (PSCell)) and CC #1, CC #2, and CC #3 being SCells are configured, and an SSB, a TRS, and a PDCCH are transmitted in each CC. In this case, the TRS of each CC is in relationships of QCL types C and D with an SSB of CC #0, and the PDCCH of each CC is in relationships of QCL types A and D with a TRS of the same CC.

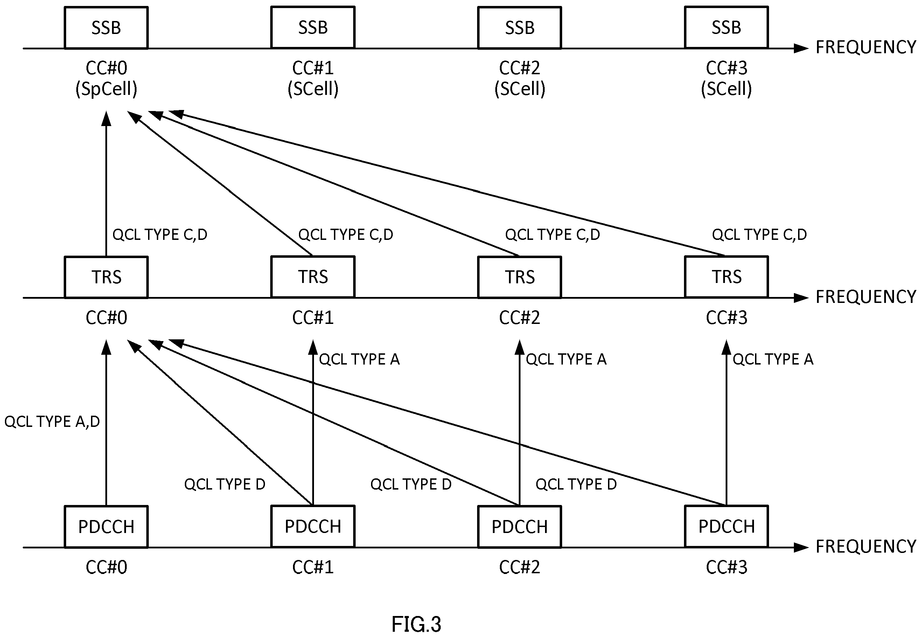

For example, such configuration illustrated in FIG. 3 is impractical. Similarly to FIG. 2 mentioned above, when the TRS of each CC is in the relationships of QCL types C and D with the SSB of CC #0, and the PDCCH of each CC is in the relationship of QCL type A with the TRS of the same CC, PDCCHs of CC #1, CC #2, and CC #3 fail to be in the relationship of QCL type D with a TRS of CC #0. When a TCI state for the PDCCH is a TRS, an RS of QCL type A and an RS of QCL type D are required to be the same TRS.

When TRS is configured as QCL type A/D RS in TCI state on a certain CC, TRS of another CC fails to be configured as QCL type A/D RS. Thus, also in a case where common TCI pool or common TCI is configured/updated/indicated between the plurality of CCs, TCI state (TCI state including the QCL type A/D RS) configuration will be performed for each CC.

When CSI-RS is configured as QCL type D RS in TCI state on a certain CC, there is a case where CSI-RS of another CC is configurable as QCL type D RS in TCI state for PDCCH/PDSCH on the certain CC. Also in this case, it is necessary that CSI-RS/TRS of the same CC is configured as QCL type A RS in TCI state. The QCL type A RS indicates that parameters for determining channel identification, such as delay spreads and average delays, are the same, and thus this is caused by a possibility that values of these parameters are different from each other in different CCs.

### (Analysis)

For the unified TCI framework, a common TCI state ID update/activation for providing common QCL information/common UL transmit spacial filter across a set of configured multiple CCs is under study.

As TCI state pool for carrier aggregation (CA), following options 1 and 2 are under study.

### {Option 1}

A single TCI state pool configured by RRC is shared for the set of configured multiple CCs (cells). For example, cell group TCI state may be specified, or TCI state pool for PDSCH in reference cell may be reused. A CC (cell) ID for a QCL type A RS is not present in TCI state, and the CC (cell) ID for a QCL type A RS may be determined according to target CC (cell) for the TCI state.

### {Option 2}

A TCI state pool is configured by the RRC for each CC.

A cell of QCL type A RS is required to be the same as a cell of DMRS for PDSCH/PDCCH for which TCI state is configured.

As mentioned above, when QCL type D RS is TRS, the QCL type D RS is required to be the same as QCL type A RS. In combination with the above, when QCL type D RS is TRS, a cell of the QCL type D RS is required to be the same as a cell of DMRS for PDSCH/PDCCH for which TCI state is configured.

When QCL type D RS is CSI-RS for which repetition is configured (has CSI-RS resources in a NZP CSI-RS resource set for which higher layer parameter "repetition" is configured (higher layer parameter "repetition" is set to "ON")), a cell of the QCL type D RS may be different from a cell of the DMRS for PDSCH/PDCCH for which TCI state is configured.

However, a method of configuration and indication of a common beam across the multiple CCs/BWPs has not been sufficiently studied. If this study is not sufficient, a degradation of communication quality, a degradation of throughput, etc. may be caused.

Thus, the inventors of the present invention came up with the idea of a method of configuration and indication of a common beam (common TCI) across the multiple BWPs/CCs.

Hereinafter, embodiments according to the present disclosure will be described in detail with reference to the drawings. The radio communication methods according to each of the aspects may each be employed individually or may be employed in combination.

In the present disclosure, "A/B/C", "at least one of A, B and C" may be interchangeably interpreted. In the present disclosure, cell, serving cell, CC, carrier, BWP, DL BWP, UL BWP, active DL BWP, active UL BWP, band may be interchangeably interpreted. In the present disclosure, index, ID, indicator, resource ID may be interchangeably interpreted. In the present disclosure, "support", "control", "can control", "operate", "can operate" may be interchangeably interpreted.

In the present disclosure, "configure", "activate", "update", "indicate", "enable", "specify", "select" may be interchangeably interpreted.

In the present disclosure, MAC CE, activation/deactivation command may be interchangeably interpreted.

In the present disclosure, higher layer signalling may be any of, for example, radio resource control (RRC) signalling, medium access control (MAC) signalling, broadcast information, etc. or a combination thereof. In the present disclosure, RRC, RRC signalling, RRC parameter, higher layer, higher layer parameter, RRC information element (IE), RRC message, may be interchangeably interpreted.

For example, MAC control element (MAC CE), MAC protocol data unit (PDU), etc. may be used for MAC signalling. Broadcast information may be, for example, master information block (MIB), system information block (SIB), remaining minimum system information (RMSI), other system information (OSI), etc.

In the present disclosure, beam, spatial domain filter, spatial setting, TCI state, UL TCI state, unified TCI state, unified beam, common TCI state, common beam, TCI assumption, QCL assumption, QCL parameter, spatial domain receive filter, UE spatial domain receive filter, UE receive beam, DL beam, DL receive beam, DL precoding, DL precoder, DL-RS, QCL type D RS for TCI state/QCL assumption, QCL type A RS for TCI state/QCL assumption, spatial relation, spatial domain transmit filter, UE spatial domain transmit filter, UE transmit beam, UL beam, UL transmit beam, UL precoding, UL precoder, PL-RS, may be interchangeably interpreted. In the present disclosure, QCL type X-RS, DL-RS associated with QCL type X, DL-RS with QCL type X, source of DL-RS, SSB, CSI -RS, SRS, may be interchangeably interpreted.

UL DCI, DCI scheduling UL channel (PUSCH), DCI format 0_x (x = 0, 1, 2,...) may be interchangeably interpreted. DL DCI, DCI scheduling DL channel (PDSCH), DCI format 1_x (x = 0, 1, 2,...) may be interchangeably interpreted.

In the present disclosure, HARQ-ACK information, ACK, NACK may be interchangeably interpreted.

In the present disclosure, link direction, downlink (DL), uplink (UL), one of UL and DL may be interchangeably interpreted.

In the present disclosure, pool, set, group, list, candidate may be interchangeably interpreted.

In the present disclosure, common beam, common TCI, common TCI state, unified TCI, unified TCI state, TCI state applicable to DL and UL, TCI state applied to multiple (type) of channels/RSs, TCI state applicable to multiple type of channels/RSs, PL-RS may be interchangeably interpreted.

In the present disclosure, multiple TCI states configured by RRC, multiple TCI states activated by MAC CE, pool, TCI state pool, active TCI state pool, common TCI state pool, joint TCI state pool, separate TCI state pool, common TCI state pool for UL, common TCI state pool for DL, common TCI state pool configured/activated by RRC/MAC CE, TCI state information may be interchangeably interpreted.

In the present disclosure, beam, spatial domain filter, spatial setting, TCI state, UL TCI state, unified TCI state, unified beam, common TCI state, common beam, TCI assumption, QCL assumption, QCL parameter, spatial domain receive filter, UE spatial domain receive filter, UE receive beam, DL beam, DL receive beam, DL precoding, DL precoder, DL-RS, QCL type D RS for TCI state/QCL assumption, QCL type A RS for TCI state/QCL assumption, spatial relation, spatial domain transmit filter, UE spatial domain transmit filter, UE transmit beam, UL beam, UL transmit beam, UL precoding, UL precoder, PL-RS, may be interchangeably interpreted. In the present disclosure, QCL type X-RS, DL-RS associated with QCL type X, DL-RS with QCL type X, source of DL-RS, SSB, CSI -RS, SRS, may be interchangeably interpreted.

In the present disclosure, panel, uplink (UL) transmitting entity, point, TRP, spatial relation, control resource set (COntrol REsource SET (CORESET)), PDSCH, code word, base station, antenna port for a signal (for example, demodulation reference signal (DeModulation Reference Signal (DMRS)) port), antenna port group for a signal (for example, DMRS port group), group for multiplexing (for example, code division multiplexing (CDM) group, reference signal group, CORESET group), CORESET pool, CORESET subset, CW, redundancy version (RV), layer (MIMO layer, transmit layer, spatial layer), may be interchangeably interpreted. Furthermore, panel identifier (ID) and panel may be interchangeably interpreted. In the present disclosure, TRP index, TRP ID, CORESET pool index, ordinal number of TCI states (first, second) in two TCI states, TRP may be interchangeably interpreted.

In the present disclosure, TRP, transmit point, panel, DMRS port group, CORESET pool, one of two TCI states associated with one code point in a TCI field may be interchangeably interpreted.

In the present disclosure, single TRP, single TRP system, single TRP transmission, single PDSCH may be interchangeably interpreted. In the present disclosure, multi TRP, multi TRP system, multi TRP transmission, multi PDSCH may be interchangeably interpreted. In the present disclosure, single DCI, single PDCCH, single DCI based multi TRP, two TCI states on at least one TCI code point are activated may be interchangeably interpreted.

In the present disclosure, single TRP, channel using single TRP, channel using a single TCI state/spatial relation is not enabled by RRC/DCI, no CORESET pool index (CORESETPoolIndex) value of 1 is configured for any COREST and no code point in TCI field is mapped to two TCI states may be interchangeably interpreted.

In the present disclosure, multi TRP, channel using multi TRP, channel using multiple TCI state/spatial relation, multi TRP is enabled by RRC/DCI, multiple TCI state/spatial relation is enabled by RRC/DCI, at least one of single DCI based multi TRP and multi DCI based multi TRP may be interchangeably interpreted.

In the present disclosure, multi TRP based on multi DCI, multi TRP based on multi DCI, CORESET pool index (CORESETPoolIndex) value of 1 is configured for CORESET, CORESET pool index is configured for one or more CORESETs and different CORESET pool indexes = 0 or 1 are configured for the CORESETs may be interchangeably interpreted.

In the present disclosure, multi TRP based on single DCI, single DCI based multi TRP, at least one codepoint in TCI field is mapped to two TCI states, no CORESET pool index in configured for CORESET, same CORESET pool index is configured for all CORESETs may be interchangeably interpreted.

In the present disclosure, TRP1 (first TRP) may correspond to CORESET pool index = 0, or may correspond to first TCI state of two TCI states corresponding to one codepoint in TCI field. TRP2 (second TRP) may correspond to CORESET pool index = 1, or may correspond to second TCI state of two TCI states corresponding to one codepoint in TCI field.

In the present disclosure, CC list, serving cell list, CC list in cell group configuration (CellGroupConfig), applicable list, simultaneous TCI update list/second simultaneous TCI update list, simultaneousTCI-UpdateList1-r16/ simultaneousTCI-UpdateList2-r16, simultaneous TCI cell list, simultaneousTCI-CellList, simultaneous spatial update list/second simultaneous spatial update list, simultaneousSpatial-UpdatedList1-r16/ simultaneousSpatial-UpdatedList2-r16, configured CC, configured list, BWP/CC in configured list, all BWPs/CCs in configured list, CC indicated by activation command, indicated CC, CC in which MAC CE is received, information indicating multiple cells for updating at least one of TCI state and spatial relation may be interchangeably interpreted.

### (Radio Communication System)

In the present disclosure, DL, DL common TCI, DL unified TCI, common TCI, unified TCI may be interchangeably interpreted. In the present disclosure, UL, UL common TCI, UL unified TCI, common TCI, unified TCI may be interchangeably interpreted.

In the present disclosure, a case of joint TCI pool, a case where joint TCI pool is configured may be interchangeably interpreted. In the present disclosure, a case of separate TCI pool, a case where separate TCI pool is configured may be interchangeably interpreted.

In the present disclosure, a case where joint TCI pool is configured, a case where TCI pools configured for DL and TCI pools configured for UL are common, a case where TCI pool for both DL and UL is configured, one TCI pool (one set of TCIs) is configured may be interchangeably interpreted.

In the present disclosure, a case where separate TCI pool is configured, a case where TCI pool configured for DL and TCI pool configured for UL are different, a case where TCI pool for DL (first TCI pool, first TCI set) and TCI pool for UL (second TCI pool, second TCI set) are configured, multiple TCI pool (multiple TCI set) are configured, TCI pool for DL is configured may be interchangeably interpreted. When TCI pool for DL is configured, TCI pool for UL may be same as the configured TCI pool.

In the present disclosure, channel/RS to which common TCI is applied may be PDSCH/HARQ-ACK information/PUCCH/PUSCH/CSI-RS/SRS.

In the present disclosure, CC/BWP to which unified TCI state is applied, application target of unified TCI state, application target may be interchangeably interpreted.

Hereinafter, in each of the embodiments of the present disclosure, a pool including multiple unified TCI states may be configured/activated for the UE and one or more of the multiple unified TCI states may be indicated. The configuration/activation may be performed with configuration information transmitted via higher layer signalling (e.g., RRC signalling/MAC CE). The indication may be performed with indication information transmitted by DCI.

Note that, in the present disclosure, signalling configuration, signalling, setting, configuration, configuration information, indication, indication information, etc. may be interchangeably interpreted.

### <First Embodiment>

A CC/BWP list (candidates) to which unified TCI state is applied may be configured/notified to the UE. The CC/BWP list to which unified TCI state is applied may be configured/notified to the UE by higher layer signalling. The CC/BWP list to which unified TCI state is applied (application target list) may be configured/notified to the UE according to at least one of the following aspect A and aspect B.

### [Aspect A]

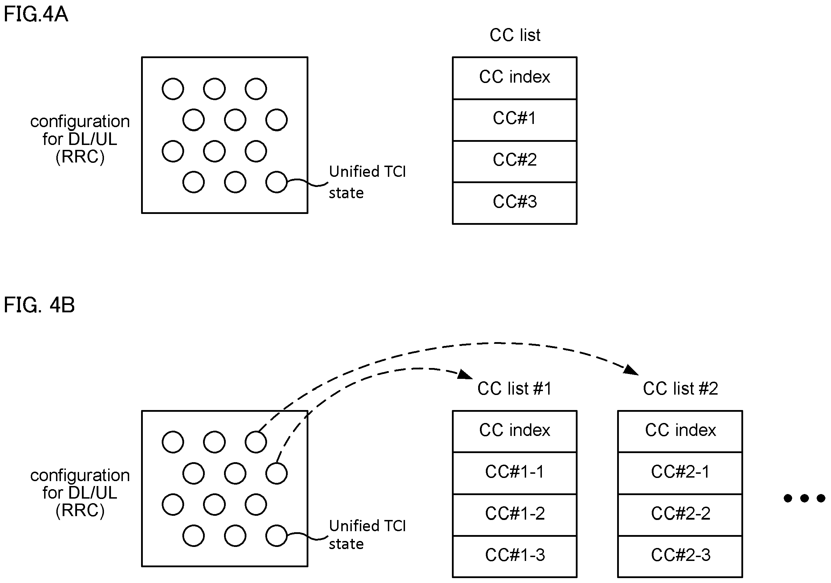

A unified TCI state is configured to the UE, and outside of the unified TCI state (in a different configuration from the unified TCI state), a list to which the unified TCI state is applied is configured to the UE (see FIG. 4A). In this case, an overhead can be reduced by configuring a common application target list for the multiple unified TCI states.

### [Aspect B]

A unified TCI state is configured to the UE, and in the unified TCI state, a CC list to which the unified TCI state is applied is configured to the UE (see FIG. 4B). In this case, the CC list can be flexibly controlled for each TCI state.

Note that, in the present disclosure, for each CC/BWP list to which unified TCI state is configured, the number of corresponding BWPs/CCs may be different. For example, when a relatively wide beam is used, a common beam (TCI) may be applied to more CCs than when a relatively narrow beam is used.

Furthermore, it may also be specified that, among CC/BWP list to which multiple unified TCI states are applied, the number of corresponding BWPs/CCs is equal. In this case, the UE operation is simplified. The UE operation in this case may be the same as the operation in Rel. 16, or an operation specified in Rel. 17 or subsequent release.

A CC/BWP list to which unified TCI state is applied may indicate an association between CC/BWP and TCI state. If application target list is indicated by MAC CE/DCI, the UE may apply, for (common TCI of) each BWP/CC included in the application target list, the corresponding TCI state.

Multiple application target lists may be configured/activated by the RRC/MAC CE. One of the multiple application targets (one TCI state list ID) may be indicated by the DCI.

According to the first embodiment above, the CC/BWP list to which unified TCI state is applied can be configured appropriately.

### <Second Embodiment>

In the second embodiment, the method to configure/notify/indicate at least one of information regarding a serving cell to which unified TCI state is applied (e.g., cell ID) and information regarding an RS (e.g., RS ID), when the unified TCI state framework is used will be described. In the present disclosure, notifying information regarding RS may mean notifying information indicating RS of a certain QCL type (for example, at least one of QCL type A and QCL type D).

According to the second embodiment, the UE may determine an RS of certain QCL type (for example, at least one of QCL type A RS and QCL type D RS) for each CC/BWP from the unified TCI state.

In the following embodiment, a case where the number of cell ID included in information regarding RS of each QCL type is 4 and the number of information regarding RS ID is 64 will be explained as an example, but the number of each is not limited to this. In addition, the number may be different for each QCL type or common.

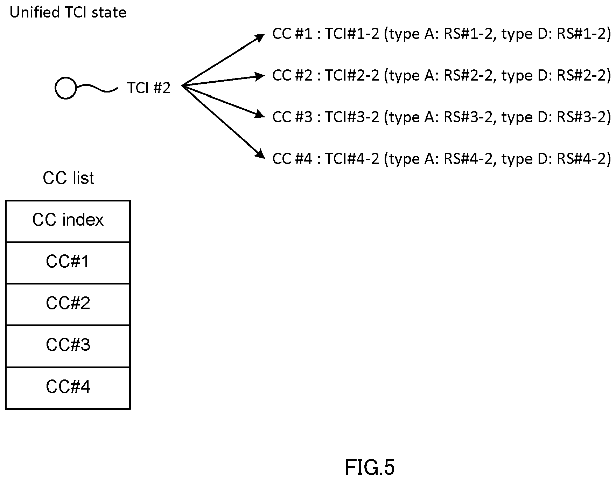

FIG. 5 is a diagram illustrating an example of a method of determination of an RS ID according to a second embodiment. In an example of FIG. 5, for the UE, TCI #2 is configured as unified TCI state and CC list of the unified TCI state is configured.

The UE determines QCL Type A RS and QCL Type D RS for each of the TCI states applied to each CC (here, CC #1 - CC #4). In the example illustrated in FIG. 5, TCI #N-2 is applied to CC #N, respectively, and TCI #N-2 indicates QCL type A RS #N-2 and QCL type D RS #N-2, respectively (N is integer from 1 to 4).

### <<Signalling Configuration 1 of Unified TCI State>>

### [Configuration 1-1]

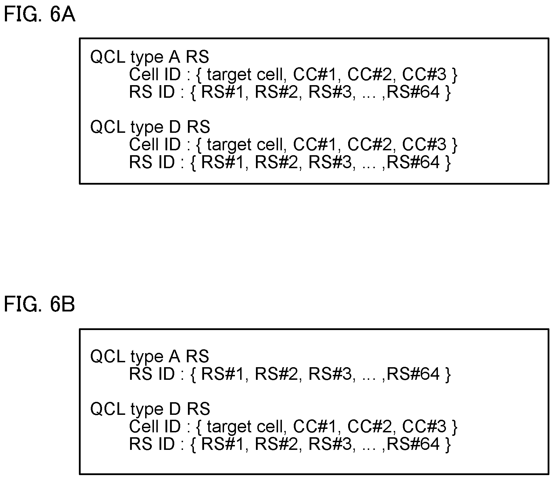

Information (configuration information) regarding RS of first QCL type (for example, QCL type A) that is notified to the UE may include a certain number (e.g., 4) of cell ID. The cell ID may include parameter indicating a target cell (CC). Furthermore, the information regarding RS of the first QCL type may include a certain number (e.g., 64) of RS ID (see FIG. 6A).

In the present disclosure, target cell may mean cell of target RS related to QCL (cell of DMRS using TCI state, cell using DMRS to which TCI state is applied, cell to which TCI state is applied). In each embodiment of the present disclosure, a case where parameter indicating the target cell is explicitly notified to the UE is illustrated, but the UE may determine that target cell is implicitly indicated when the parameter indicating the target cell is not specified and cell ID is not notified to the UE.

Information (configuration information) regarding RS of second QCL type (for example, QCL type D) that is notified to the UE may include a certain number (e.g., 4) of cell ID. The cell ID may include parameter indicating a target cell (CC). Furthermore, the information regarding RS of the second QCL type may include a certain number (e.g., 64) of RS ID.

### [Configuration 1-2]

For Rel. 15, QCL type A RS is only RS for which TCI state is configured. In other words, cell ID of the QCL type A RS cannot be configured to any cell other than target cell. Therefore, information regarding RS of first QCL type (for example, QCL type A) that is notified to the UE may not include cell ID, but may include a certain number (for example, 64) of RS ID (see FIG. 6B).

In Configuration 1-2, information regarding RS of second QCL type (for example, QCL type D) may be the same as in Configuration 1-1 above.

Configuration 1-2 can reduce signalling overhead compared to Configuration 1-1.

According to the above signalling configuration 1 of unified TCI state, RS of each QCL type to be used by the UE can be notified flexibly.

### <<Signalling Configuration 2 of Unified TCI State>>

An RS of first QCL type (for example, QCL type A) notified to the UE and an RS ID of second QCL type (for example, QCL type D) RS may not configured separately. In other words, the UE may apply a notified RS ID to the RS of first QCL type and the RS of second QCL type in common.

### [Configuration 2-1]

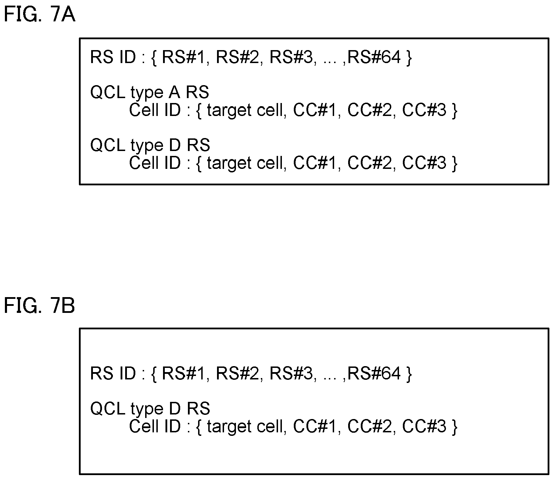

Information regarding RS of first QCL type that is notified to the UE may include a certain number (e.g., 4) of cell ID. Furthermore, information regarding RS of second QCL type that is notified to the UE may include a certain number (e.g., 4) of cell ID. At least one of cell ID for the RS of first QCL type and cell ID for the RS of second QCL type may include parameter indicating target cell (CC) (see FIG. 7A).

### [Configuration 2-2]

Information regarding RS of first QCL type (for example, QCL type A) that is notified to the UE may not include cell ID, but may include a certain number (for example, 64) of RS ID. Furthermore, information regarding RS of second QCL type (for example, QCL type D) may be the same as in Configuration 2-1 above (see FIG. 7B).

Configuration 2-2 can reduce signalling overhead compared to Configuration 2-1.

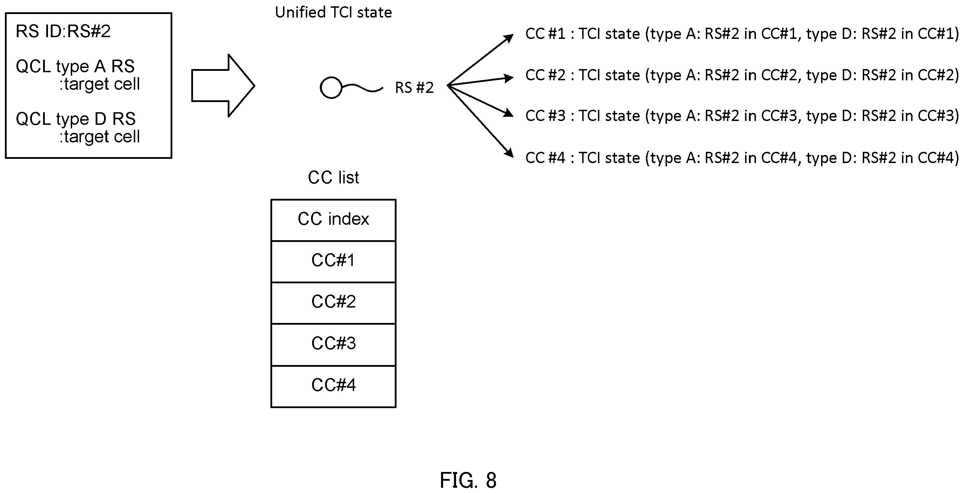

FIG. 8 is a diagram illustrating an example of a method of application of an RS according to the second embodiment. FIG. 8 illustrates an example of the above configuration 2-1 of the signalling configuration 2 of the unified TCI state. In the example illustrated in FIG. 8, RS #2 is notified to the UE as an RS ID of QCL type A RS and an RS ID of the QCL type D RS. Furthermore, parameter indicating target cell is notified to the UE as a cell to which the RS of QCL type A and the RS of QCL type D are applied. Furthermore, a CC/BWP list to which unified TCI state is applied is configured to the UE and the application target list includes CC#1 - CC#4.

In the example illustrated in FIG. 8, the UE determines that unified TCI state is RS #2, and that, for the TCI state corresponding to each CC (CC#1 - CC#4), the RS of QCL type A and the RS of QCL type D are RS #2.

Note that, in the example illustrated in FIG. 8, a case where parameter indicating target cell is notified to the UE is illustrated, but the UE may determine that the parameter is not notified to the UE, but target cell is implicitly indicated to the UE.

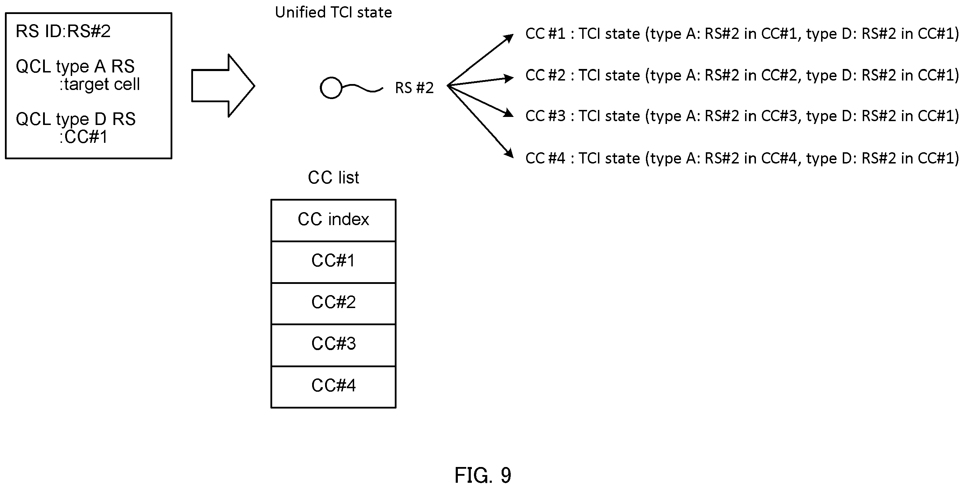

FIG. 9 is a diagram illustrating another example of a method of application of RS according to the second embodiment. FIG. 9 illustrates an example of the above configuration 2-1 of the signalling configuration 2 of the unified TCI state. In the example illustrated in FIG. 9, RS #2 is notified to the UE as an RS ID of QCL type A RS and an RS ID of QCL type D RS. Furthermore, parameter indicating target cell of the RS of QCL type A is notified to the UE, and CC #1 is notified as a cell to which the RS of QCL type D is applied. Furthermore, a CC/BWP list to which unified TCI state is applied is configured to the UE and the application target list includes CC#1 - CC#4.

In the example illustrated in FIG. 9, the UE determines that unified TCI state is RS #2. Furthermore, the UE determines the RS #2 of QCL type A in CC #1 and the RS #2 of QCL type D in CC #1 as the TCI state for CC #1. Similarly, the UE determines the RS #2 of QCL type A in CC #2-4 and the RS #2 of QCL type D in CC #1 as TCI state for CC #2-4 separately.

Note that, in the present disclosure, "RS in CC" may mean a CSI-RS/TRS resource index configured in each CC/BWP, a CSI-RS/TRS resource index configured in each CC/BWP for the unified TCI state, or a TCI state index configured in each CC/BWP for the unified TCI state.

According to the above signalling configuration 2 of unified TCI state, the UE can appropriately notify RS of each QCL type to be used, while reducing signalling overhead.

### <<Signalling Configuration 3 of Unified TCI State>>

An application target list may be configured to the UE and RS IDs for each certain QCL type (for example, QCL type A, QCL type D). Unlike above signalling configurations 1 and 2, indication of the CC by parameter indicating a target cell for the UE may not be performed.

Information regarding RS of first QCL type (for example, QCL type A) corresponding to each CC in the application target list and information regarding RS of second QCL type (for example, QCL type D) that are configured to the UE may include a certain number (for example, 64) of RS ID.

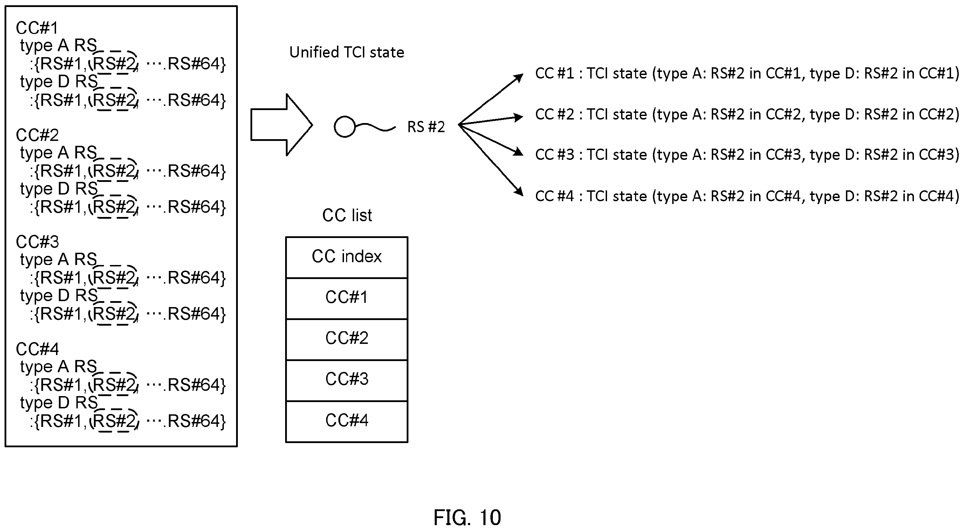

FIG. 10 is a diagram illustrating an example of the method of application of the RS in signalling configuration 3 of the unified TCI state. In the example illustrated in FIG. 10, RS ID of QCL type A RS and RS ID of the QCL type D RS for each CC (CC#1 - CC#4) are configured to the UE.

In the example illustrated in FIG. 10, the UE is indicated to apply RS #2 to the QCL type A RS and the QCL type D RS of each CC. The UE applies RS #2 in CC #N to the QCL type A RS and QCL type D RS in CC #N, respectively (N is integer from 1 to 4).

According to the above signalling configuration 3 of unified TCI state, RS of each QCL type to be used by the UE for each CC can be notified flexibly.

According to the second embodiment above, even when the TCI state using the unified TCI state is configured, a cell to which the TCI state is applied and a reference signal can be determined appropriately.

### <Third Embodiment>

A higher layer parameter (RRC information element)/UE capability corresponding to at least one function (characteristic, feature) in the first and second embodiments may be defined. The UE capability may indicate that the UE supports the function.

A UE for which the higher layer parameter corresponding to the function is configured may perform the function. It may be defined that a UE for which the higher layer parameter corresponding to the function is not configured does not perform the function.

A UE that reports the UE capability indicating that the UE supports the function may perform the function. It may be defined that a UE that does not report the UE capability indicating that the UE supports the function does not perform the function.

When a UE reports the UE capability indicating that the UE supports the function, and the higher layer parameter corresponding to the function is configured, the UE may perform the function. It may be defined that when a UE does not report the UE capability indicating that the UE supports the function or when the higher layer parameter corresponding to the function is not configured, the UE does not perform the function.

The function may be a common beam indication/separate beam indication.

For example, the higher layer parameters may be at least one of the following parameters: parameter for configuring a unified TCI state, parameter for a common TCI state pool for UL/DL, and parameter for a common TCI state pool across multiple BWPs/CCs.

In addition, for example, the UE capability may be to support at least one of the following: a unified TCI state, a common TCI state pool for UL/DL, and a common TCI state pool across multiple BWPs/CCs.

According to the third embodiment above, the UE can embody the above functions while maintaining compatibility with existing specifications.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

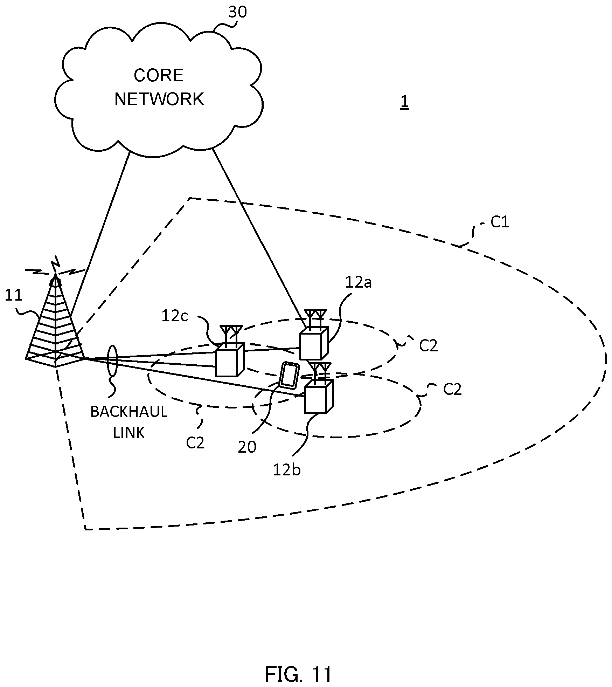

FIG. 11 is a diagram illustrating an example of a schematic structure of the radio communication system according to one embodiment. The radio communication system 1 may be a system implementing a communication using Long Term Evolution (LTE), 5th generation mobile communication system New Radio (5G NR), etc. the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, etc.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, etc. of each cell and user terminal 20 are by no means limited to the aspect shown in the diagram. Hereinafter, the base stations 11 and 12 will be collectively referred to as "base stations 10", unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions, etc. of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface, etc.) or a wireless connection (for example, an NR communication). For example, if an NR communication is used as a backhaul between the base stations 11 and 12, the base station 11 corresponding to a higher station may be referred to as an "Integrated Access Backhaul (IAB) donor", and the base station 12 corresponding to a relay station (relay) may be referred to as an "IAB node".

The base station 10 may be connected to a core network 30 through another base station 10 or directly. For example, the core network 30 may include at least one of Evolved Packet Core (EPC), 5G Core Network (5GCN), Next Generation Core (NGC), etc.

The user terminal 20 may be a terminal supporting at least one of communication schemes such as LTE, LTE-A, 5G, etc.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), etc. may be used.

The wireless access scheme may be referred to as a "waveform". Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)), etc., may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)), etc. may be used as uplink channels.

User data, higher layer control information, System Information Blocks (SIBs), etc. are transmitted on the PDSCH. User data, higher layer control information, etc. may be transmitted on the PUSCH. The Master Information Blocks (MIBs) may be transmitted on the PBCH.

Lower layer control information may be transmitted on the PDCCH. For example, the lower layer control information may include downlink control information (DCI) including scheduling information of at least one of the PDSCH or the PUSCH.

Note that DCI for scheduling the PDSCH may be referred to as "DL assignment", "DL DCI", etc., and DCI for scheduling the PUSCH may be referred to as "UL grant", "UL DCI", etc. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set". Note that a "search space", a "search space set", a "search space configuration", a "search space set configuration", a "CORESET", a "CORESET configuration", etc. of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, etc.), and scheduling request (SR) may be transmitted by means of the PUCCH. By means of the PRACH, random access preambles for establishing connections with cells may be transmitted.

Note that the downlink, the uplink, etc. in the present disclosure may be expressed without a term of "link". In addition, various channels may be expressed without adding "Physical" to the head.

In the radio communication system 1, a synchronization signal (SS), a downlink reference signal (DL-RS), etc. may be transmitted. In the radio communication system 1, a cell-specific reference signal (CRS), a channel state information-reference signal (CSI-RS), a demodulation reference signal (DMRS), a positioning reference signal (PRS), a phase tracking reference signal (PTRS), etc. may be transmitted as the DL-RS.

For example, the synchronization signal may be at least one of a primary synchronization signal (PSS) or a secondary synchronization signal (SSS). A signal block including an SS (PSS, SSS) and a PBCH (and a DMRS for a PBCH) may be referred to as an "SS/PBCH block", an "SS Block (SSB)", etc. Note that an SS, an SSB, etc. may be also referred to as a "reference signal".

In the radio communication system 1, a sounding reference signal (SRS), a demodulation reference signal (DMRS), etc. may be transmitted as an uplink reference signal (UL-RS). Note that DMRS may be referred to as a "user terminal specific reference signal (UE-specific Reference Signal)".

### (Base Station)

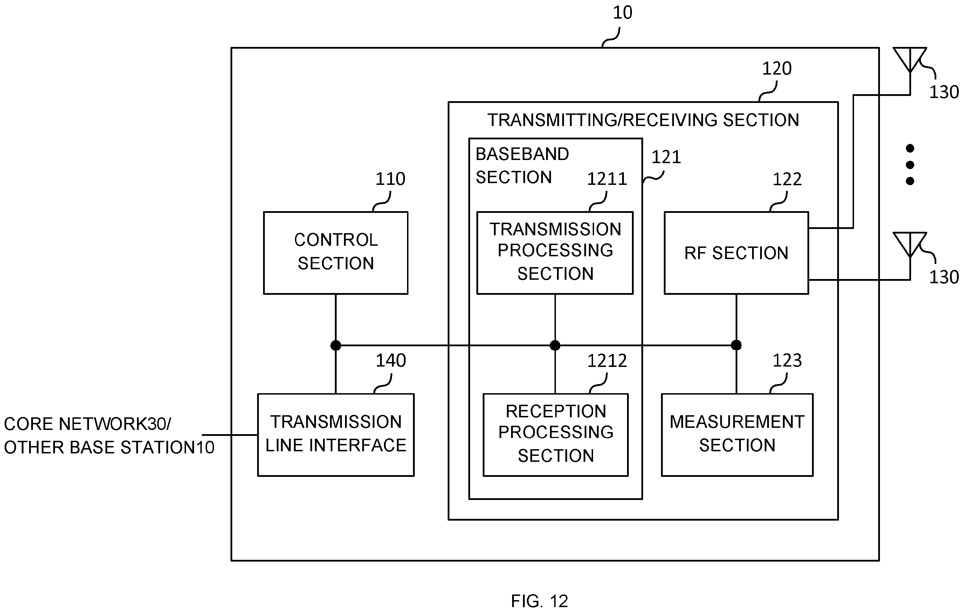

FIG. 12 is a diagram illustrating an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, etc. described based on general understanding of the technical field to which the present disclosure pertains.

The control section 110 may control generation of signals, scheduling (for example, resource allocation, mapping), etc. The control section 110 may control transmission and reception, measurement, etc. using the transmitting/receiving section 120, the transmitting/receiving antennas 130, and the transmission line interface 140. The control section 110 may generate data, control information, a sequence, etc. to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, etc. described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, etc. described based on general understanding of the technical field to which the present disclosure pertains.

The transmitting/receiving section 120 may transmit the above-described downlink channel, synchronization signal, downlink reference signal, etc. The transmitting/receiving section 120 may receive the above-described uplink channel, uplink reference signal, etc.

The transmitting/receiving section 120 may form at least one of a transmit beam or a receive beam by using digital beam forming (for example, precoding), analog beam forming (for example, phase rotation), etc.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), etc., for example, on data and control information, etc. acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, etc., on the bit string to transmit, and output a baseband signal.

The transmitting/receiving section 120 (RF section 122) may perform modulation to a radio frequency band, filtering, amplification, etc., on the baseband signal, and transmit the signal of the radio frequency band through the transmitting/receiving antennas 130.

On the other hand, the transmitting/receiving section 120 (RF section 122) may perform amplification, filtering, demodulation to a baseband signal, etc., on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, demapping, demodulation, decoding (which may include error correction decoding), MAC layer processing, the processing of the RLC layer and the processing of the PDCP layer, etc., on the acquired baseband signal, and acquire user data, etc.

The transmitting/receiving section 120 (measurement section 123) may perform the measurement related to the received signal. For example, the measurement section 123 may perform Radio Resource Management (RRM) measurement, Channel State Information (CSI) measurement, etc., based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), etc. The measurement results may be output to the control section 110.

The transmission line interface 140 may perform transmission/reception (backhaul signalling) of a signal with an apparatus included in the core network 30 or other base stations 10, etc., and acquire, transmit, etc. user data (user plane data), control plane data, etc. for the user terminal 20.

Note that the transmitting section and the receiving section of the base station 10 in the present disclosure may be constituted with at least one of the transmitting/receiving section 120, the transmitting/receiving antennas 130, or the transmission line interface 140.

The transmitting/receiving section 120 may receive a list of multiple serving cells or a list of multiple bandwidth parts, to which multiple transmission configuration indication (TCI) states that are applicable to multiple types of channels are applied, receive configuration information of the multiple TCI states, and transmit indication information indicating one or more TCI states among the multiple TCI states. The control section 110 may control at least one of transmission and reception of the multiple types of channels to which a reference signal of a certain quasi-co-location (QCL) type is applied, the reference signal being determined based on the configuration information and the indication information and being applied to the multiple serving cells or the multiple bandwidth parts (first and second embodiments).

### (User Terminal)

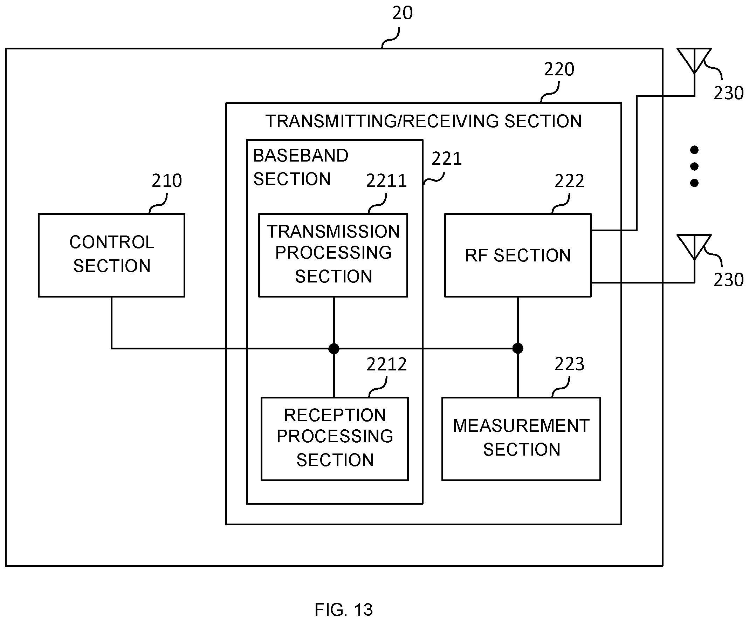

FIG.13 is a diagram illustrating an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, etc. described based on general understanding of the technical field to which the present disclosure pertains.

The control section 210 may control generation of signals, mapping, etc. The control section 210 may control transmission/reception, measurement, etc. using the transmitting/receiving section 220, and the transmitting/receiving antennas 230. The control section 210 generates data, control information, a sequence, etc. to transmit as a signal and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, etc. described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, etc. described based on general understanding of the technical field to which the present disclosure pertains.

The transmitting/receiving section 220 may receive the above-described downlink channel, synchronization signal, downlink reference signal, etc. The transmitting/receiving section 220 may transmit the above-described uplink channel, uplink reference signal, etc.

The transmitting/receiving section 220 may form at least one of a transmit beam or a receive beam by using digital beam forming (for example, precoding), analog beam forming (for example, phase rotation), etc.

The transmitting/receiving section 220 (transmission processing section 2211) may perform the processing of the PDCP layer, the processing of the RLC layer (for example, RLC retransmission control), the processing of the MAC layer (for example, HARQ retransmission control), etc., for example, on data and control information etc. acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, etc., on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, etc., on the baseband signal, and transmit the signal of the radio frequency band through the transmitting/receiving antennas 230.

On the other hand, the transmitting/receiving section 220 (RF section 222) may perform amplification, filtering, demodulation to a baseband signal, etc., on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, etc., on the acquired baseband signal, and acquire user data, etc.

The transmitting/receiving section 220 (measurement section 223) may perform the measurement related to the received signal. For example, the measurement section 223 may perform RRM measurement, CSI measurement, etc., based on the received signal. The measurement section 223 may measure a received power (for example, RSRP), a received quality (for example, RSRQ, SINR, SNR), a signal strength (for example, RSSI), channel information (for example, CSI), etc. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a list of multiple serving cells or a list of multiple bandwidth parts, to which multiple transmission configuration indication (TCI) states that are applicable to multiple types of channels are applied, receive configuration information of the multiple TCI states, and receive indication information indicating one or more TCI states among the multiple TCI states. The control section 210 may determine, based on the configuration information and the indication information, a reference signal of a certain quasi-co-location (QCL) type, the reference signal being applied to the multiple serving cells or the multiple bandwidth parts (first and second embodiments).

When the configuration information includes one or more serving cell indices and the one or more serving cell indices include a cell index of a cell to which the one or more TCI states are applied, the control section 120 may determine the reference signal of the certain QCL type which is applied to each of the multiple serving cells or the multiple bandwidth parts (second embodiment).

When the configuration information does not include a serving cell index, the control section 120 may determine the reference signal of the certain QCL type which is applied to each of the multiple serving cells or the multiple bandwidth parts, respectively (second embodiment).

The configuration information may include reference signal indices of the certain QCL type which correspond to the multiple serving cells or the multiple bandwidth parts, respectively (second embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, etc.) and using these plurality of pieces of apparatus. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, etc., but function are by no means limited to these. For example, functional block (components) to implement a function of transmission may be referred to as a "transmitting section (transmitting unit)", a "transmitter", etc. The method for implementing each component is not particularly limited as described above.

For example, a base station, a user terminal, etc. according to one embodiment of the present disclosure may function as a computer that executes the processes of the radio communication method of the present disclosure. FIG.10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, etc.

Note that in the present disclosure, the words such as an apparatus, a circuit, a device, a section, a unit, etc. can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented simultaneously, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, etc. For example, at least part of the above-described control section 110 (210), the transmitting/receiving section 120 (220), etc. may be implemented by the processor 1001.

Furthermore, the processor 1001 reads programs (program codes), software modules, data, etc. from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" etc. The memory 1002 can store executable programs (program codes), software modules, etc. for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) etc.), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", etc. The communication apparatus 1004 may be configured to include a high frequency switch, a duplexer, a filter, a frequency synthesizer, etc. in order to realize, for example, at least one of frequency division duplex (FDD) and time division duplex (TDD). For example, the above-described transmitting/receiving section 120 (220), the transmitting/receiving antennas 130 (230), etc. may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, etc.) The output apparatus 1006 is an output device that allows sending output to the outside (for example, a display, a speaker, a Light Emitting Diode (LED) lamp, etc.) Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), etc., and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel", a "symbol", and a "signal" (or signalling) may be interchangeably interpreted. Also, "signals" may be "messages". A reference signal may be abbreviated as an "RS", and may be referred to as a "pilot", a "pilot signal", etc., depending on which standard applies. Furthermore, a "component carrier (CC)" may be referred to as a "cell", a "frequency carrier", a "carrier frequency" etc.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, etc.

A slot may be constituted of one or a plurality of symbols in the time domain (Orthogonal Frequency Division Multiplexing (OFDM) symbols, Single Carrier Frequency Division Multiple Access (SC-FDMA) symbols, etc.) Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols less than the number of slots. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI", a plurality of consecutive subframes may be referred to as a "TTI", or one slot or one mini-slot may be referred to as a "TTI". That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot", a "mini-slot", etc. instead of a "subframe".

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, etc. Note that, when TTIs are given, the time interval (for example, the number of symbols) to which transport blocks, code blocks, codewords, etc. are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel.8 to Rel.12), a "long TTI", a "normal subframe", a "long subframe", a "slot", etc. A TTI that is shorter than a normal TTI may be referred to as a "shortened TTI", a "short TTI", a "partial or fractional TTI", a "shortened subframe", a "short subframe", a "mini-slot", a "sub-slot", a "slot", etc.

Note that a long TTI (for example, a normal TTI, a subframe, etc.) may be interpreted as a TTI having a time length exceeding 1 ms, and a short TTI (for example, a shortened TTI, etc.) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, etc. each may be constituted of one or a plurality of resource blocks.

Note that one or a plurality of RBs may be referred to as a "physical resource block (Physical RB (PRB))", a "sub-carrier group (SCG)", a "resource element group (REG)",a "PRB pair", an "RB pair", etc.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", etc.) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell", a "carrier", etc. in the present disclosure may be interpreted as a "BWP".

Note that the above-described structures of radio frames, subframes, slots, mini-slots, symbols, etc. are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, etc. can be variously changed.

Also, the information, parameters, etc. described in the present disclosure may be represented in absolute values or in relative values with respect to given values, or may be represented in another corresponding information. For example, radio resources may be indicated by given indices.

Furthermore, mathematical expressions that use these parameters, etc. may be different from those expressly disclosed in the present disclosure. Furthermore, mathematical expressions that use these parameters, etc. may be different from those expressly disclosed in the present disclosure. For example, since various channels (PUCCH, PDCCH, etc.) and information elements can be identified by any suitable names, the various names allocated to these various channels and information elements are in no respect limiting.

The information, signals, etc. described in the present disclosure may be represented by using any of a variety of different technologies. For example, data, instructions, commands, information, signals, bits, symbols, chips, etc., all of which may be referenced throughout the herein-contained description, may be represented by voltages, currents, electromagnetic waves, magnetic fields or particles, optical fields or photons, or any combination of these.

Also, information, signals, etc. can be output in at least one of from higher layers to lower layers and from lower layers to higher layers. Information, signals, etc. may be input and/or output via a plurality of network nodes.

The information, signals, etc. that are input and/or output may be stored in a specific location (for example, a memory) or may be managed by using a management table. The information, signals, etc. to be input and/or output can be overwritten, updated, or appended. The information, signals, etc. that are output may be deleted. The information, signals, etc. that are input may be transmitted to another apparatus.

Reporting of information is by no means limited to the aspects/embodiments described in the present disclosure, and other methods may be used as well. For example, reporting of information in the present disclosure may be implemented by using physical layer signalling (for example, downlink control information (DCI), uplink control information (UCI), higher layer signalling (for example, Radio Resource Control (RRC) signalling, broadcast information (master information block (MIB), system information blocks (SIBs), etc.), Medium Access Control (MAC) signalling, etc.), and other signals or combinations of these.

Note that physical layer signalling may be referred to as "Layer 1/Layer 2 (L1/L2) control information (L1/L2 control signals)", "L1 control information (L1 control signal)", etc. Also, RRC signalling may be referred to as an "RRC message", and can be, for example, an RRC connection setup message, an RRC connection reconfiguration message, etc. Also, MAC signalling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software", "firmware", "middleware", "microcode", or "hardware description language", or called by other terms, should be interpreted broadly to mean instructions, instruction sets, code, code segments, program codes, programs, subprograms, software modules, applications, software applications, software packages, routines, subroutines, objects, executable files, execution threads, procedures, functions, etc.

Also, software, commands, information, etc. may be transmitted and received via communication media. For example, when software is transmitted from a website, a server, or other remote sources by using at least one of wired technologies (coaxial cables, optical fiber cables, twisted-pair cables, digital subscriber lines (DSL), etc.) and wireless technologies (infrared radiation, microwaves, etc.), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", etc. can be used interchangeably.

In the present disclosure, the terms such as a "base station (BS)", a "radio base station", a "fixed station", a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", etc. can be used interchangeably. The base station may be referred to as the terms such as a "macro cell", a small cell", a "femto cell", a "pico cell", etc.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus", etc. Note that at least one of a base station and a mobile station may be device mounted on a moving object or a moving object itself, etc. The moving object may be a vehicle (for example, a car, an airplane, etc.), may be a moving object which moves unmanned (for example, a drone, an automatic operation car, etc.), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, etc.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", etc.) In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel etc. may be interpreted as a side link channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), etc. may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, etc. that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, etc.) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", etc. as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, etc.

Furthermore, "judging (determining)" may be interpreted to mean making "judgments (determinations)" about receiving (for example, receiving information), transmitting (for example, transmitting information), input, output, accessing (for example, accessing data in a memory), etc.

In addition, "judging (determining)" as used herein may be interpreted to mean making "judgments (determinations)" about resolving, selecting, choosing, establishing, comparing, etc. In other words, "judging (determining)" may be interpreted to mean making "judgments (determinations)" about some action.

In addition, "judging (determining)" may be interpreted as "assuming", "expecting", "considering", etc.

The "maximum transmit power" described in the present disclosure may mean the maximum value of the transmit power, the nominal UE maximum transmit power, or the rated UE maximum transmit power.

The terms "connected" and "coupled", or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, etc.

In the present disclosure, the phrase "A and B are different" may mean that "A and B are different from each other". Note that the phrase may mean that "A and B is each different from C". The terms "separate", "be coupled", etc. may be interpreted similarly to "different".

When terms such as "include", "including", and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a", "an", and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a list of multiple serving cells or a list of multiple bandwidth parts, to which multiple transmission configuration indication (TCI) states that are applicable to multiple types of channels are applied, receives configuration information of the multiple TCI states, and receives indication information indicating one or more TCI states among the multiple TCI states; and
a control section that determines, based on the configuration information and the indication information, a reference signal of a certain quasi-co-location (QCL) type, the reference signal being applied to the multiple serving cells or the multiple bandwidth parts.

2. The terminal according to claim1, wherein
when the configuration information includes one or more serving cell indices and the one or more serving cell indices include a cell index of a cell to which the one or more TCI states are applied, the control section determines the reference signal of the certain QCL type which is applied to each of the multiple serving cells or the multiple bandwidth parts.

3. The terminal according to claim 1, wherein
when the configuration information does not include a serving cell index, the control section determines the reference signal of the certain QCL type which is applied to each of the multiple serving cells or the multiple bandwidth parts, respectively.

4. The terminal according to claim1, wherein
the configuration information includes reference signal indices of the certain QCL type which correspond to the multiple serving cells or the multiple bandwidth parts, respectively.

5. A radio communication method for a terminal, comprising:
receiving a list of multiple serving cells or a list of multiple bandwidth parts, to which multiple transmission configuration indication (TCI) states that are applicable to multiple types of channels are applied, receiving configuration information of the multiple TCI states, and receiving indication information indicating one or more TCI states among the multiple TCI states; and
determining, based on the configuration information and the indication information, a reference signal of a certain quasi-co-location (QCL) type, the reference signal being applied to the multiple serving cells or the multiple bandwidth parts.

6. A base station comprising:
a transmitting section that receives a list of multiple serving cells or a list of multiple bandwidth parts, to which multiple transmission configuration indication (TCI) states that are applicable to multiple types of channels are applied, receives configuration information of the multiple TCI states, and transmits indication information indicating one or more TCI states among the multiple TCI states; and
a control section that controls at least one of transmission and reception of the multiple types of channels to which a reference signal of a certain quasi-co-location (QCL) type is applied, the reference signal being determined based on the configuration information and the indication information and being applied to the multiple serving cells or the multiple bandwidth parts.
